# EUROPÄISCHE PATENTSCHRIFT

(11) **EP 0 828 993 B1**
(45) Veröffentlichungstag und Bekanntmachung des Hinweises auf die Patenterteilung: **19.02.2003**
(21) Anmeldenummer: 97908276.5
(22) Anmeldetag: 20.03.1997
(51) Int. Cl.: G01D 5/347, G01B 3/02

(54) **BANDFÖRMIGES, ELASTISCH BIEGBARES MASSBAND FÜR LÄNGEN- ODER WINKELMESSSEINRICHTUNGEN**
STRIP-SHAPED RESILIENTLY FLEXIBLE MEASURING TAPE FOR LENGTH- OR ANGLE-MEASURING DEVICES
METRE-RUBAN SOUS FORME DE RUBAN SOUPLE POUR DISPOSITIFS DE MESURE DE LONGUEURS ET D'ANGLES

(30) Priorität: 26.03.1996 DE 19611983
(43) Veröffentlichungstag der Anmeldung: 18.03.1998
(73) Patentinhaber: Dr. Johannes Heidenhain GmbH, 83301 Traunreut (DE)
(72) Erfinder: BÖGE, Ludwig, D-07747 Jena (DE); FREITAG, Hans-Joachim, D-07749 Jena (DE)
(86) Internationale Anmeldenummer: EP9701421
(87) Internationale Veröffentlichungsnummer: WO97036149

(56) Entgegenhaltungen:
- DE-A- 4 204 878
- DE-C- 19 526 517

## Beschreibung

Die Erfindung bezieht sich auf ein bandförmiges, elastisch biegbares Maßband für Längen- oder Winkelmeßeinrichtungen, das mit einer Meßteilung versehen ist.

Solche Maßbänder werden im industriellen Einsatz für Längen- oder Winkelmessungen an z.B. Werkzeugmaschinen o.ä. eingesetzt, wobei jeweils ein Maßband in geeigneter Weise z.B. am Maschinenbett der Werkzeugmaschine oder an deren Aufspanntisch befestigt und seine Meßteilung durch einen mit dem anderen Teil geeignet verbundenen Meßkopf abgetastet wird. Dabei wird für die Befestigung der Maßbänder entweder das Maßband direkt mittels eines geeigneten Klebers an seiner zugeordneten Aufnahmeunterlage angeklebt oder über einen Maßstabskörper, in dem das Maßband z.B. ebenfalls durch Verklebung gehaltert wird, an dieser befestigt.

Wird das Maßband aufgeklebt, kommt es in ihm unvermeidbar zum Aufbau mechanisch bedingter innerer Spannungen, sei es durch die erforderlichen Andruckkräfte beim Aufkleben, da niemals ein längskräftefreies Andrücken mögtich ist, sei es durch innere Spannungen, die sich beim Härten bzw. Altern des Klebers ergeben, oder durch thermische Spannungen infolge unterschiedlicher thermischer Ausdehnungskoeffizienten von Maßband und Maßstabsträger bzw. Aufnahmeunterlage. Aus alledem können sich für die Messung nicht vernachlässigbare Fehler ergeben, welche die Genauigkeit eines solchen Meßsystems erheblich beeinträchtigen. Eine weitere Fehlermöglichkeit entsteht bei Maßbändern auch beim Auftreten von Verbiegungen, weil die Maßbandoberfläche, die in der Regel die Meßteilung trägt, bei einer Verbiegung des Maßbandes sich in ihrer Länge verändert. Durch die Verbiegung entstehen im Maßband, jeweils abhängig von der örtlichen Lage relativ zur neutralen Faser, örtliche Zug- und Druckspannungen, die ebenfalls einen Längsfehler bewirken. Dieser Längsfehler nimmt mit wachsendem Abstand von der neutralen Faser und daher mit steigender Maßbanddicke zu, so daß zu seiner Minimierung die Verwendung möglichst dünner Maßbänder wünschenswert ist. Mit abnehmender Maßbanddicke nimmt jedoch die Eigenstabilität des Maßbandes stark ab, was zur Folge hat, daß dann schon geringe mechanische Spannungen, wie sie beim Aufklebeprozeß unvermeidlich sind, zum Auftreten merklicher Fehler führen, weshalb unter diesem Gesichtspunkt die Verwendung dickerer und damit eigenstabilerer Maßbänder wünschenswert ist.

In einem Artikel in "F & M Feinwerktechnik und Meßtechnik", Jg. 80, Heft 7, S. 333 ff., ist ein Maßband beschrieben, bei dem in einen rostfreien Maßstabskörper aus Stahl eine Nut eingeschliffen ist, die zur Aufnahme eines dünnen Stahlbandes mit der Meßteilung dient, das dort eingekittet wird. Zur Unterstützung der Verkittung ist das Stahlband seitlich über Schweißpunkte mit dem zugeordneten Trägerkörper verbunden. Bei dieser Lösung können zwar Trägerkörper und Maßband getrennt voneinander hergestellt und somit das Maßband in beliebiger Länge kostengünstig produziert werden. Die dabei erreichbare Genauigkeit des Meßsystems ist jedoch begrenzt, da die relativ geringe Längssteifigkeit des dünnen Stahlbandes, die Unebenheiten des Bandes, die Ungleichmäßigkeit der Kittschicht und die Maßstabsfehler bei Verbiegung des Maßstabskörpers zu nicht mehr vernachlässigbaren Fehlern führen.

Aus der DE-PS 25 05 587 ist eine Meßeinrichtung bekannt, bei der ein Maßstab über eine Silikonkautschuk-Klebeschicht flächig auf einem metallischen Träger befestigt ist. Bei dieser Art der elastischen Befestigung des Maßstabs auf einem stabilen Grundkörper wirken immer noch große, nicht zu vernachlässigende Zwangskräfte, die wiederum zu Deformationen des Maßstabs führen können. Denn die elastischen Haftkräfte der Klebeschicht können insbesondere bei relativ dünnen Maßstäben noch unzulässig groß sein.

Bei einer anderen Art von Meßsystemen, wie sie z.B. in der PCT-WO19/02919 beschrieben werden, wird ein selbstklebender Stahlbandmaßstab über einen Applikator zum Führungsablauf des Schlittens ausgerichtet und auf das Maschinenbett oder einen Grundkörper aufgeklebt. Dieses bekannte Meßsystem ist sehr montageaufwendig und die erreichbare Meßsystem-Genauigkeit ist nur relativ begrenzt, da die Eigenstabilität des Maßbandes ziemlich gering ist und geringste mechanische Spannungen oder Spannungsdifferenzen bereits zum Auftreten entsprechender Fehler führen. Der Linearitätsfehler derart aufgeklebter Maßbänder beträgt bis zu etwa 40 µm/m Maßband. Damit ist die erzielbare Genauigkeit stark eingeschränkt bzw. die Maßstabsfehler müssen durch Kalibriermessungen, z.B. mittels eines Laserinterferometers, elektronisch korrigiert werden, was einen zusätzlich Meßaufwand bedeutet und eine elektronische Korrektureinrichtung voraussetzt.

Hiervon ausgehend liegt der Erfindung die Aufgabe zugrunde, ein Maßband der eingangs genannten Art derart weiterzuentwickeln, daß es auch bei geringer Dicke dennoch eine ausreichende Längsstabilität aufweist und die bei der Montage und bei Biegebewegungen auftretenden Fehler besonders gering sind.

Erfindunggemäß wird dies bei einem gattungsgemäßen Maßband dadurch erreicht, daß es aus zwei elastisch biegbaren, aneinander über einen viskosen Zwischenfilm haftenden Streifen besteht, auf deren einem die Meßteilung angebracht ist.

Bei dem erfindungsgemäßen Maßband wird die Kopplung durch die Kapillarwirkung der viskosen Zwischenschicht erzeugt, wodurch die Bänder bezüglich der auftretenden mechanischen Spannungen voneinander weitgehend entkoppelt sind. Bei kleinen Verschiebegeschwindigkeiten der Bänder relativ zueinander tritt zwischen ihnen keinerlei Haftreibung auf, wobei die Bänder jedoch durch die relativ große Kapillarwirkung des viskosen Zwischenfilms, also einer dünnen viskosen Zwischenschicht, fest zusammengehalten werden und insgesamt einen stabilen Verbund ausbilden. Bei diesem ist durch die Kapillarwirkung auch das Herauslaufen des viskosen Zwischenfilms gut verhindert. Beim Auftreten schneller Verschiebegeschwindigkeiten zwischen den beiden Bändern nimmt die durch den viskosen Zwischenfilm erzeugte viskose Reibkraft zwischen diesen stark zu, wodurch auch in Längsrichtung des Verbundes eine große Stabilität erzielt wird. Durch diese Art der Kopplung wird die auftretende Spannung in dem nicht die Meßteilung aufweisenden, elastisch biegbaren Streifen vom anderen Streifen, der die Meßteilung trägt, entkoppelt und der mit ersterem verbundene Deformationsanteil nicht auf den anderen Streifen übertragen. Aber auch bei langsam ablaufenden Biegebewegungen wird durch den Einsatz der viskos miteinander verbundenen Streifen die Möglichkeit geschaffen, den die Meßteilung tragenden Streifen besonders dünn zu halten und dennoch durch die Zusammenwirkung mit dem anderen Streifen im Verbund in Längsrichtung eine Längssteifigkeit zu erhalten, die deutlich größer ist als die des Streifens mit der Meßteilung allein. Durch die vollständige spannungsmäßige Entkopplung beider Streifen werden die temperaturbedingten Längenänderungen des Streifens, der auf der Unterlage befestigt wird (und der üblicherweise die Meßteilung nicht trägt), ebenso wie Längenänderungen des Maschinenteils, an dem er befestigt ist, nicht auf den Streifen, der die Meßteilung trägt, übertragen: es liegt damit ein besonders einfach beschreibbares Temperaturdehnungsverhalten des die Meßteilung tragenden Streifens (und damit des Maßbandes) vor, das unabhängig von den thermischen Ausdehnungskoeffizienten der Befestigungsaufnahme und des viskosen Zwischenfilms ist. Letzterer sorgt durch die flächige Auflage und seine sehr geringe Dicke auch noch für einen guten Temperaturausgleich zwischen beiden Bändern.

Eine vorteilhafte Ausgestaltung des erfindungsgemäßen Maßbandes besteht auch darin, daß der nicht die Meßteilung tragende Streifen seinerseits aus zwei über einen viskosen oder einen elastischen Zwischenfilm aneinander haftenden Bändern bestehen kann, wodurch die Möglichkeit geschaffen wird, den die Meßteilung tragenden Streifen noch dünner ausbilden zu können und dennoch bei sehr guter spannungsmäßiger Entkopplung der einzelnen Streifen zueinander eine gute Längsstabilität des Maßbandes zu erhalten.

Der viskose Zwischenfilm kann bei dem erfindungsgemäßen Maßband aus jedem geeigneten viskosen Mittel gewählt werden, besteht aber bevorzugt aus Silikonöl, vorzugsweise einer Dicke von 1 µm bis 5 µm. Ein anderes bevorzugtes Mittel für den viskosen Zwischenfilm ist auch Silikonfett. Ganz besonders bevorzugt liegt die kinematische Viskosität des viskosen Zwischenfilms im Bereich von 3.000 bis 50.000 mm²/s. Es hat sich gezeigt, daß bei Verwendung einer Zwischenschicht mit einer größeren Viskosität die Zeitdauer des Spannungsausgleichs zwischen den Einzelbändern zu groß werden kann und bei Verwendung eines viskosen Mediums mit noch niederer Viskosität die Gefahr besteht, daß bei kurzzeitig hohen Verschiebekräften zwischen den Bändern sich diese voneinander lösen können. Silikonöl wie Silikonfett erweist sich auch hinsichtlich der Langzeitbeständigkeit und der Verträglichkeit gegenüber den bevorzugt eingesetzten Metallbändern für die einzelnen Streifen als besonders gut geeignet.

Als Streifen haben sich ganz besonders Stahlbänder mit einer geschliffenen oder polierten Oberfläche als geeignet erwiesen, wobei besonders bevorzugt beide Streifen jeweils aus Federstahl einer Dicke von 250 µm bestehen. Ganz besonders bevorzugt wird auf dem Streifen, der die Teilung trägt, eine besonders gut reflektierende Oberflächenschicht aufgebracht, die es gestattet, die für die optische Signalqualität bedeutsame Mikrostruktur und den Reflexionsgrad der reflektierenden Oberfläche dieses Streifens in besonders hoher Güte zur Verfügung zu stellen, was bei Stahlbändern direkt zu erzeugen technologisch etwas aufwendiger und damit kostspieliger ist. Die Aufbringung einer solchen speziellen, besser reflektierenden Oberflächenschicht auf dem die Teilung tragenden Streifen ist daher besonders wirtschaftlich.

Vorzugsweise wird das erfindungsgemäße Maßband so ausgebildet, daß der die Teilung nicht tragende Streifen breiter als der die Teilung tragende Streifen ist, was den Vorteil ergibt, daß in diesem seitlich überstehenden Randbereich die Befestigungsmittel des anderen, am z.B. Maschinenbett zu befestigenden Streifens angreifen können.

In einer anderen vorteilhaften Weiterbildung des erfindungsgemäßen Maßbandes bestehen die beiden Streifen aus Werkstoffen voneinander unterschiedlicher thermischer Ausdehnungskoeffizienten, wodurch sich im Hinblick auf auftretende Temperaturspannungen eine besonders gute Anpassung des am Maschinenbett o.ä. zu befestigenden Streifens (Fixierstreifen) an das Maschinenbett erreichen läßt, während der die Meßteilung tragende Streifen (Teilungsstreifen) gerade im Hinblick auf möglichst geringe Wärmedehnungen ausgelegt werden kann. Die viskose Zwischenschicht zwischen beiden ermöglicht es dabei, daß die auftretenden, bei beiden Streifen unterschiedlichen Temperaturdehnungen voneinander entkoppelt stattfinden können, obgleich die Ankopplung der beiden Streifen aneinander durch die viskose Zwischenschicht wirksam ist.

Eine andere vorteilhafte Ausgestaltung der Erfindung besteht auch darin, daß beide Streifen an einer Stelle, bevorzugt an einem der beiden Enden des Maßbandes oder ungefähr in der Mitte des Maßbandes, fest miteinander verbunden sind. Dies bringt den Vorteil, daß eine exakte Zuordnung einer bestimmten Stelle beider Bänder zueinander unter allen Betriebsbedingungen gewährleistet ist, auch wenn die Bänder aufgrund unterschiedlicher Beanspruchung oder unterschiedlicher Eigenschaften bei Betrieb verschiedenen temperatur- oder spannungsbedingten Längenänderungen unterliegen.

Das erfindungsgemäße Maßband läßt sich bevorzugt auch zur Ausbildung einer Winkelmeßeinrichtung einsetzen, wobei es zu diesem Zweck um den Außenumfang eines zylindrischen Grundkörpers herum angeordnet ist. Bevorzugt liegt dabei der die Meßteilung nicht tragende Streifen am Grundkörper an, wobei er, erneut vorzugsweise, kraft- und/oder formschlüssig mit dem zylindrischen Grundkörper verbunden ist. Dabei dient der am Grundkörper befestigte, die Meßteilung nicht tragende und mit dem anderen Streifen über den viskosen Zwischenfilm verbundene Streifen als eine Art Ausgleichsband. Solche Streifen sind handelsüblich in einer Vielzahl unterschiedlichster Dicken erhältlich. Da es insbesondere bei großen Durchmessern der Winkelmeßeinrichtung sehr schwierig und aufwendig ist, den erforderlichen Durchmesser des Grundkörpers so exakt herzustellen, wie er für eine vorgegebene Periodenanzahl auf dem Umfangs des Maßbandes benötigt wird, wobei eine Abweichung vom Solldurchmesser des Grundkörpers von nur 10 µm z.B. eine Umfangsabweichung von über 30 µm zur Folge hat, bietet die Erfindung hier den großen Vorteil, daß bei einer Verwendung des erfindungsgemäßen Maßbandes die hohen Forderungen an einen eng tolerierten Durchmesser des Grundkörpers deutlich entschärft werden können: es muß nur die Dicke des am Grundkörper befestigten Streifens (Ausgleichsband) so gewählt werden, daß der tatsächliche Durchmesser des Grundkörpers und die Dicke des Ausgleichsbandes gemeinsam zu einer optimalen Spannung des die Teilung tragenden Streifens führen. Zudem können auch die auf der Oberfläche des Grundkörpers vorhandenen Oberflächenrauhigkeiten durch den auf diese Oberfläche aufgelegten Streifen (Ausgleichsband) des erfindungsgemäßen Maßbandes nahezu vollständig ausgeglichen werden. Ist der Fall gegeben, daß ein Grundkörper mit besonders großer Oberflächengüte und exaktem Durchmesser bereits zur Verfügung steht, kann auch der die Teilung tragende Streifen direkt über eine viskose Zwischenschicht auf den Grundkörper aufgebracht und mit diesem so verbunden werden, wobei es in diesem Fall des zweiten, als "Ausgleichsband" wirksamen Streifens nicht mehr bedarf. Im Gegensatz zu bekannten Winkelmeßeinrichtungen, bei denen bei der Justierung der Stoßstelle des um den Umfang des Grundkörpers herumgelegten Maßbandes dieses spannt und die nicht unerheblichen Zugspannungen infolge des Umschlingungsgrades und der relativ großen Gleitreibung zwischen Maßband und Aufnahmekörper nicht gleichmäßig über den Umfang des Maßbandes verteilt werden können, wird bei Einsatz des erfindungsgemäßen Maßbandes durch die Kapillarwirkung der viskosen Zwischenschicht eine weitestgehende Entkoppelung der mechanischen Spannungen, die in beiden Bändern auftreten, erreicht und insbesondere in dem um den Umfang des Grundkörpers liegenden Streifen der dort auftretende Deformationsanteil nicht auf den die Meßteilung tragenden Streifen übertragen.

Bevorzugt wird bei der Anwendung des erfindungsgemäßen Maßbandes für eine Winkelmeßeinrichtung der die Meßteilung nicht tragende Streifen kraft- und/oder formschlüssig mit dem Grundkörper verbunden und weist, weiter bevorzugt, seitliche Führungselemente für den die Meßteilung tragenden Streifen auf. Es ist ferner vorteilhaft, wenn der die Meßteilung tragende Streifen im Einbauzustand unter Zugspannung steht, wobei bevorzugt seine Enden mittels Spannschlössern miteinander verbunden sind.

Bevorzugt verläuft der die Meßteilung tragende Streifen des erfindungsgemäßen Maßbandes nicht ganz über den Umfang des Grundkörpers herum, wobei er, ebenfalls bevorzugt, mit dem Grundkörper an mindestens einer Stelle fest verbunden ist.

Bei dem erfindungsgemäßen Maßband werden die auftretenden Biegespannungen in den Einzelbändern bzw. Streifen vor allem in dem dünnen Streifen, der die Meßteilung trägt, stark reduziert, da sich bei den langsam ablaufenden Biegebewegungen die Spannungen in den Einzelbändern weitestgehend entkoppelt voneinander aufbauen, da eine Übertragung durch den viskosen Zwischenfilm auf den benachbarten Streifen so gut wie nicht stattfindet, und die auftretenden Biegespannungen bleiben auch wegen der geringen Dicke, die für die einzelnen Streifen gewählt werden kann, sehr klein. Dadurch wird insgesamt der auftretende Längenfehler infolge von Durchbiegungen gegenüber den herkömmlichen Maßbändern stark reduziert und erweist sich für die meisten Meßaufgaben, auch mit höheren Anforderungen, als vernachlässigbar klein. Der viskose Zwischenfilm sorgt ferner dafür, daß der Streifenverbund im Vergleich zu einem dicken Band auch noch schwingungsgedämpft ist.

Die Erfindung wird nachfolgend anhand der Zeichnung im Prinzip beispielshalber noch näher erläutert. Es zeigen:
Fig. 1 einen Querschnitt durch eine Prinzipdarstellung einer Meßeinrichtung mit einem erfindungsgemäßen Maßband, dessen unterer Streifen auf eine Halterung aufgeklebt ist;
Fig. 2 einen Schnitt (quer zur Längsrichtung) durch eine Meßeinrichtung mit einem erfindungsgemäßen Maßband, dessen die Meßteilung nicht tragender Streifen auf einer Aufspannunterlage festgespannt ist;
Fig. 3 einen Schnitt (quer zur Längsrichtung) durch eine Meßeinrichtung mit einem erfindungsgemäßen Maßband, bei dem der die Meßteilung nicht tragende Streifen (Fixierband) auf einem Grundbett befestigt ist und auf ihm seitliche Führungselemente für den die Meßteilung tragenden Streifen angebracht sind;
Fig. 4 ein Querschnitt durch eine Winkelmeßeinrichtung mit einem erfindungsgemäßen Maßband, und
Fig. 5 einen der Fig. 4 entsprechenden Querschitt durch eine Winkelmeßeinrichtung mit einem erfindungsgemäßen Maßband, jedoch mit einer Fertigungsabweichung beim Durchmesser des zylindrischen Grundkörpers.

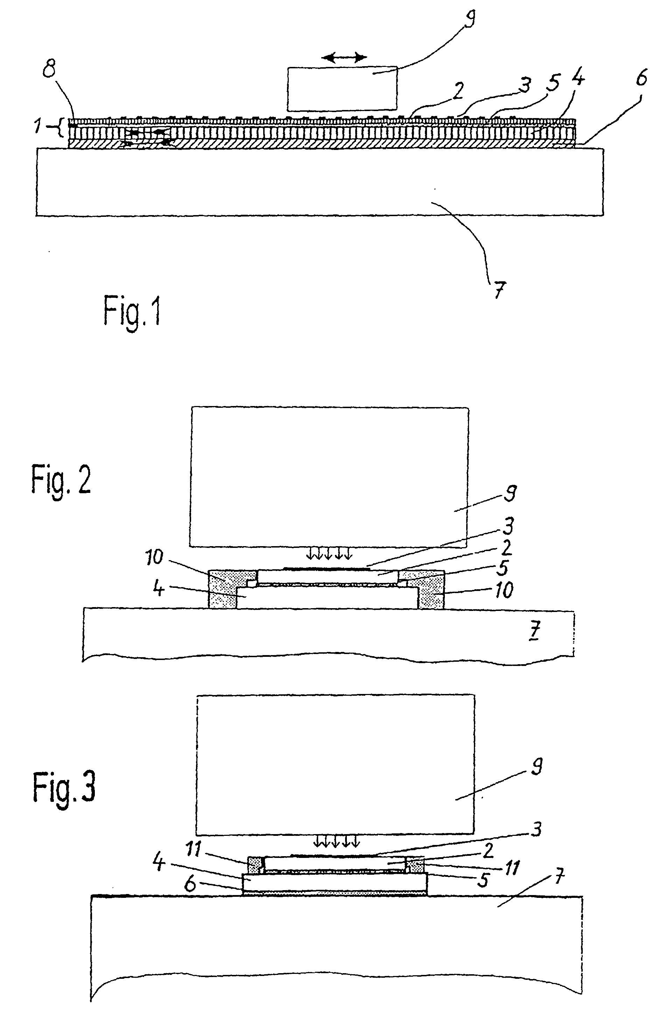

In Fig. 1 ist eine analoge Meßeinrichtung mit einem Maßband 1 gezeigt, das aus einem dünnen, obenliegenden Streifen 2, der eine lineare Meßteilung 3 trägt, und einem darunterliegenden, dickeren Streifen 4 besteht, wobei die Streifen 2 und 4 über einen viskosen Zwischenfilm 5 aus Silikonöl miteinander verbunden sind. Der die Meßteilung 3 tragende Streifen 2, der nachfolgend als "Teilungsträger" bezeichnet wird, besteht aus einem polierten, handelsüblichen Edelstahlband, etwa der Firma Sandvik mit der Typbezeichnung 7C27Mo2 mit hoher Oberflächengüte (Mikrorauhigkeit kleiner als 0,05 µm). Auch der untenliegende, dickere Streifen 4, der nachfolgend als "Fixierungsband" bezeichnet sein soll, besteht aus einem handelsüblichen Edelstahlband gleichen Materials und gleicher Oberflächenqualität. Für den viskosen Zwischenfilm 5 wird ein Silikonöl mit einer kinematischen Viskosität von 10.000 mm²/s verwendet, wie es etwa von der Firma Wacker Chemie GmbH unter der Bezeichnung "AK10000" angeboten wird. Die Dicke des Fixierungsbandes 4 beträgt beim gewählten Ausführungsbeispiel 300 µm. Dieses Fixierungsband 4 ist mittels eines doppelseitigen Klebebandes 12 mit einem Grundbett 7 (etwa einem Maschinenbett oder einem Aufspanntisch) fest verbunden, wobei sich hierfür z.B. ein Klebeband der Firma 3M mit der Bezeichnung "Scotch-doppelseitiger Klebefilm Nr. 9485" verwenden läßt.

An einem Ende des Maßbandes 1 (bei der Darstellung in Fig. 1; am linken Ende) ist über eine örtliche starre Klebeverbindung 8 der obere Streifen (Teilungsträger) 2 mit dem Fixierungsband 4 fest verbunden, wobei für die Klebeverbindung z.B. ein Epoxi-Klebstoff Typ 380 der Firma Polytech eingesetzt werden kann. Infolge der starren Verklebung des Fixierungsbandes 4 mit dem Grundbett 7 wird über diesen Klebepunkt ein Fixpunkt des Meßsystems realisiert. Beim Aufkleben des Fixierungsbandes 4 mit dem Klebeband 6 treten infolge unvermeidbarer Längskräfte sowohl im Klebeband 6, wie auch im Fixierungsband 4 innere Spannungen auf, die in Fig. 1 auf der linken Seite des Schnittbildes durch einander zugewandte Pfeildarstellungen in jeder der beiden Schichten angedeutet sind und die auch zu Längenänderungen führen. Diese Längenänderungen werden jedoch nicht von dem viskosen Zwischenfilm 5 übertragen, so daß der Teilungsträger 2 (oberer Streifen), der die Meßteilung trägt, auf dem Fixierungsband 4 sozusagen "spannungsentkoppelt" befestigt ist.

Der obere Streifen (Teitungsträger) 2 besteht aus 200 µm dickem und 10 mm breitem Edelstahlband, weist eine große Teilungsgenauigkeit der Rasterteilung 3, nämlich 1 µm/m, auf und kann durch diese spannungsentkoppelte Befestigung mit einer Genauigkeit von weniger als 1 µm/m Meßlänge übertragen werden. Auch andere Deformationen des Grundbettes 7, wie z.B. mechanische oder thermische Deformationen, werden nur bis zum unteren Streifen 4 (Fixierungsband) übertragen, während der obere Streifen 2 mit der Meßteilung 3 völlig spannungsfrei bleibt.

Wie Fig. 1 zeigt, ist über dem Maßband 1 noch ein Meßkopf 9 angeordnet, der in der angegebenen Pfeilrichtung beidseits verfahrbar ist und mittels dessen entlang der Meßrichtung eine Abtastung der Meßteilung 3 des Maßbandes 1 vorgenommen werden kann (die Darstellung des Meßkopfes 9 ist nur rein schematisch und zum besseren Verständnis).

In den Fig. 2 und 3 sind in schematischer Weise zwei weitere Querschnitte (quer zur Längsrichtung) durch eine Meßanordnung gezeigt, bei der wiederum der die Meßteilung (Rasterteilung) 3 tragende Teilungsträger 2 über einen viskosen Zwischenfilm 5 mit dem unteren Streifen (Fixierband) 4 verbunden ist, das seinerseits an einem Grundbett 7 befestigt ist. Dabei sind bei der in Fig. 2 dargestellten Anordnung entlang der Längsränder des Fixierbandes 4 seitliche Spannelemente 10 angebracht, mittels derer das Fixierband 4 auf dem Grundbett 7 festgespannt wird, wobei diese seitlichen Spannelemente so ausgebildet sind, daß sie mit ihren einander zugewandten Seitenkanten neben der festen Verbindung des Fixierbandes 4 gleichzeitig auch noch eine seitliche Lageausrichtung des oberen, die Teilung 3 tragenden Streifens 2 darstellen. Dabei ist das Fixierungsband 4 breiter als der obere Streifen 2, der die Meßteilung 3 trägt, ausgebildet, wobei die Spannwirkung der seitlichen Spannelemente 10 in dem seitlich über den Teilungsträger 2 überstehenden Bereich des Fixierungsbandes 4 erfolgt und dieses dort von oben her gegen das Grundbett 7 angespannt werden kann.

Die Anordnung nach Fig. 3 unterscheidet sich von der aus Fig. 2 dadurch, daß hier das ebenfalls seitlich überstehende Fixierungsband 4 wiederum mittels einer Verklebung 6 (etwa in Form eines doppelseitigen Klebebandes o.ä.) am Grundbett 7 starr befestigt ist, während auf seinen oberen, seitlich über die Breite des die Meßteilung 3 tragenden oberen Streifens 2 liegenden Bereichen Führungselemente 11 zur seitlichen Führung des Teilungssträgers 2 angeklebt sind.

In beiden Fällen ist der Meßkopf 9 wiederum zur Abtastung der Meßteilung 3 in Längsrichtung der Einrichtung oberhalb des Teilungsträgers 2 verschieblich.

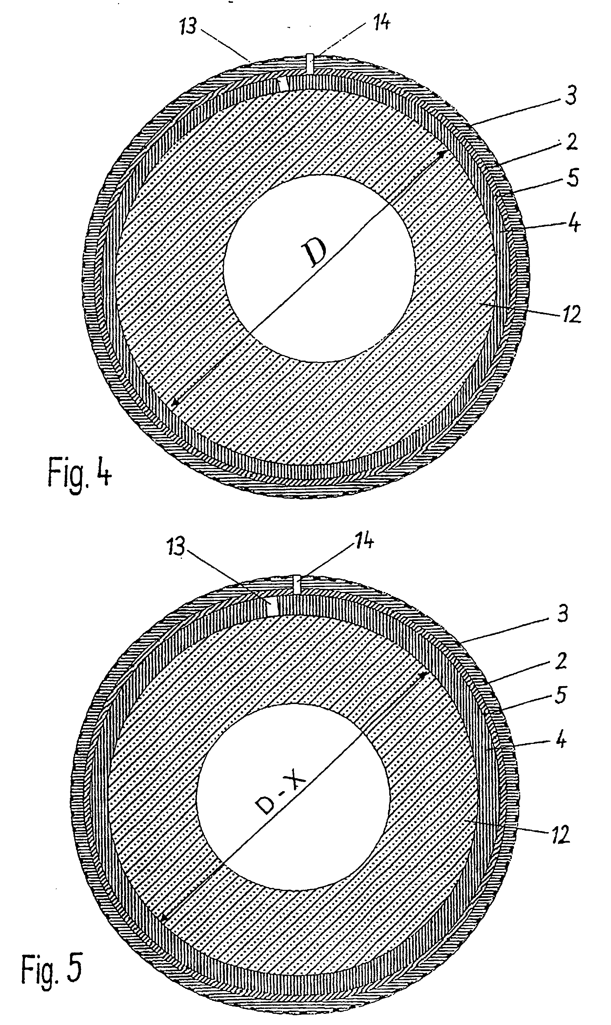

Die Fig. 4 zeigt ebenso wie die Fig. 5 einen Querschnitt durch eine Winkelmeßeinrichtung, die einen zylindrischen Grundkörper 12 mit einem Durchmesser *D* aufweist, der bevorzugt aus einem trommelförmigen Grundkörper besteht.

Um den zylindrischen Außenmantel des Grundkörpers 12 herum ist ein aus zwei Streifen 2 und 4 bestehendes Maßband gelegt, das um den Außenumfang des Grundkörpers 12 herum verspannt wird. Dabei wird mittels eines (in der Figur nicht gezeigten) Spannschlosses das Maßband so gespannt, daß auch an der Stoßstelle die erwünschte Rasterperiode eingestellt ist, auch wenn sich zwischen den Enden des Fixierungsbandes 4 bzw. des Teilungsträgers 2 jeweils ein kleiner Längsspalt 13 bzw. 14 einstellt.

Bei dem in Fig. 5 gezeigten Ausführungsbeispiel ist der Außendurchmesser des trommelförmigen Grundkörpers 12 wegen einer Fertigungsabweichung *X* vom Nennwert des Durchmessers etwas kleiner als im Beispiel der Fig. 4. Um dies auszugleichen, wird für das um den Außenumfang des Grundkörpers 12 herumgelegte Maßband ein solches eingesetzt, bei dem das Fixierungsband 4 in seiner Dicke etwas größer als bei der Ausführung nach Fig. 4 ist, und zwar um soviel größer, daß die fertigungsbedingte Durchmesserabweichung gerade ausgeglichen wird. Ansonsten sind die Verhältnisse bei der Darstellung der Fig. 5 ebenso wie bei der der Fig. 4 gleich. Dasselbe könnte auch in umgekehrter Richtung gelten, wenn nämlich die Durchmesserabweichung bei der Herstellung derart wäre, daß der letztlich erreichte Durchmesser etwas größer als der gewünschte Nenndurchmesser ist, wobei in diesem Fall dann ein entsprechend weniger dickes Fixierungsband 4 zum Ausgleich dieser Durchmesserabweichung eingesetzt werden müßte.

## Patentansprüche

1. Bandförmiges, elastisch biegsames Maßband (1) für Längen- oder Winkelmeßeinrichtungen mit einer Meßteilung (3), **dadurch gekennzeichnet, daß** es aus zwei elastisch biegbaren, aneinander über einen viskosen Zwischenfilm (5) haftenden Streifen (2,4) besteht, auf deren einem (2) die Meßteilung (3) angebracht ist.

2. Maßband nach Anspruch 1, **dadurch gekennzeichnet, daß** der nicht die Meßteilung (3) tragende Streifen (4) seinerseits aus zwei über einen viskosen oder einen elastischen Zwischenfilm aneinander haftenden Bändern besteht.

3. Maßband nach Anspruch 1 oder 2, **dadurch gekennzeichnet, daß** der viskose Zwischenfilm (5) aus Silikonöl besteht.

4. Maßband nach Anspruch 3, **dadurch gekennzeichnet, daß** der viskose Zwischenfilm (5) 1 µm bis 5 µm dick ist.

5. Maßband nach Anspruch 1 oder 2, **dadurch gekennzeichnet, daß** der viskose Zwischenfilm (5) aus Silikonfett besteht.

6. Maßband nach einem der Ansprüche 1 bis 5, **dadurch gekennzeichnet, daß** die Viskosität des Zwischenfilms (5) im Bereich von 3.000 bis 50.000 mm²/s liegt.

7. Maßband nach einem der Ansprüche 1 bis 6, **dadurch gekennzeichnet, daß** der die Meßteilung (3) nicht tragende Streifen (4) breiter als der die Meßteilung (3) tragende Streifen (2) ist.

8. Maßband nach einem der Ansprüche 1 bis 7, **dadurch gekennzeichnet, daß** die Streifen (2,4) aus Stahlbändern geschliffener oder polierter Oberfläche bestehen.

9. Maßband nach Anspruch 8, **dadurch gekennzeichnet, daß** beide Streifen (2,4) jeweils aus Federstahl einer Dicke von 250 µm bestehen.

10. Maßband nach Anspruch 8 oder 9, **dadurch gekennzeichnet, daß** auf die Oberfläche des die Meßteilung (3) tragenden Stahlbandes (2) eine Oberflächenschicht aufgebracht ist, die bessere Reflexionseigenschaften als die Oberfläche des Stahlbandes (2) aufweist.

11. Maßband nach einem der Ansprüche 1 bis 7, **dadurch gekennzeichnet, daß** beide Streifen (2,4) aus Werkstoffen voneinander unterschiedlicher thermischer Ausdehnungskoeffizienten bestehen.

12. Maßband nach einem der Ansprüche 1 bis 11, **dadurch gekennzeichnet, daß** beide Streifen (2,4) an einer Stelle (8) fest miteinander verbunden sind.

13. Maßband nach Anspruch 12, **dadurch gekennzeichnet, daß** die Stelle der festen Verbindung (8) an einem der beiden Enden des Maßbandes (1) liegt.

14. Maßband nach Anspruch 12, **dadurch gekennzeichnet, daß** die Stelle der festen Verbindung (8) ungefähr in der Mitte des Maßbandes (1) liegt.

15. Maßband nach einem der Ansprüche 1 bis 14, **dadurch gekennzeichnet, daß** es zur Ausbildung einer Winkelmeßeinrichtung um den Außenumfang eines zylindrischen Grundkörpers (12) herum angeordnet ist, wobei der die Meßteilung (3) nicht tragende Streifen (4) am Grundkörper (12) anliegt.

16. Maßband nach Anspruch 15, **dadurch gekennzeichnet, daß** der die Meßteilung (3) nicht tragende Streifen (4) kraft- und/oder formschlüssig mit dem Grundkörper (12) verbunden ist.

17. Maßband nach Anspruch 15 oder 16, **dadurch gekennzeichnet, daß** der die Meßteilung (3) nicht tragende Streifen (4) seitliche Führungsetemente (10;11) für den die Meßteilung (3) tragenden Streifen (2) aufweist.

18. Maßband nach einem der Ansprüche 15 bis 17, **dadurch gekennzeichnet, daß** der die Meßteilung (3) tragende Streifen (2) im Einbauzustand unter Zugspannung steht.

19. Maßband nach Anspruch 18, **dadurch gekennzeichnet, daß** die Enden des die Meßteilung (3) tragenden Streifens (2) mittels Spannschlössern miteinander verbunden sind.

20. Maßband nach einem der Ansprüche 15 bis 19, **dadurch gekennzeichnet, daß** der die Meßteilung (3) tragende Streifen (2) nicht ganz über den Umfang des Grundkörpers (12) herum verläuft.

21. Maßband nach einem der Ansprüche 15 bis 20, **dadurch gekennzeichnet, daß** der die Meßteilung (3) tragende Streifen (2) mit dem Grundkörper (12) an mindestens einer Stelle fest verbunden ist.

## Claims

1. An elastically flexible measuring tape (1) of band tape form for length or angle measuring devices with a measuring scale (3) **characterized in that** it consists of two elastically flexible strips (2, 4) adhering to one another through a viscous intermediate film (5) and on one of which (2) the measuring scale (3) is applied.

2. A measuring tape according to claim 1, **characterized in that** the strip (4) not carrying the measuring scale (3) consists for its part of two bands adhering to one another through a viscous or elastic intermediate film.

3. A measuring tape according to claim 1 or 2, **characterized in that** the viscous intermediate film (5) consist of a silicone oil.

4. A measuring tape according to claim 3, **characterized in that** the viscous intermediate film (5) is 1 µm to 5 µm thick.

5. A measuring tape according to claim 1 or 2, **characterized in that** the viscous intermediate film (5) consists of a silicone grease.

6. A measuring tape according to any of claims 1 to 5, **characterized in that** the viscosity of the intermediate film (5) lies in the range from 3,000 to 50,000 mm²/s.

7. A measuring tape according to any of claims 1 to 6, **characterized in that** the strip (4) not carrying the measuring scale (3) is wider than the strip (2) carrying the measuring scale (3).

8. A measuring tape according to any of claims 1 to 7, **characterized in that** the strips (2, 4) consist of steel tapes with ground or polished surfaces.

9. A measuring tape according to claim 8, **characterized in that** both strips (2, 4) consist of spring steel of a thickness of 250 µm.

10. A measuring tape according to claim 8 or 9, **characterized in that** a surface film which has better reflection properties than the surface of the steel tape (2) is applied to the surface of the steel tape (2) carrying the measuring scale (3).

11. A measuring tape according to any of claims 1 to 7, **characterized in that** the two strips (2, 4) consist of materials with different coefficients of thermal expansion.

12. A measuring tape according to any of claims 1 to 11, **characterized in that** the two strips are firmly connected together at one place (8).

13. A measuring tape according to claim 12, **characterized in that** the place of the firm connection (8) lies at one of the two ends of the measuring tape (1).

14. A measuring tape according to claim 12, **characterized in that** the place of the firm connection (8) lies approximately in the middle of the measuring tape (1).

15. A measuring tape according to any of claims 1 to 14, **characterized in that** it is disposed around the periphery of a cylindrical base body (12), in order to form an angle measuring device, wherein the strip (4) not carrying the measuring scale (3) bears on the base body (12).

16. A measuring tape according to claim 15, **characterized in that** the strip (4) not carrying the measuring scale (3) is connected to the base body (12) in frictional or positively engaged manner.

17. A measuring tape according to claim 15 or 16, **characterized in that** the strip (4) not carrying the measuring scale (3) has lateral guide elements (10; 11) for the strip (2) carrying the measuring scale (3).

18. A measuring tape according to any of claims 15 to 17, **characterized in that** the strip (2) carrying the measuring scale (3) is under tension in the installed state.

19. A measuring tape according to claim 18, **characterized in that** the ends of the strip (2) carrying the measuring scale (3) are connected together by means of strainers.

20. A measuring tape according to any of claims 15 to 19, **characterized in that** the strip (2) carrying the measuring scale (3) does not extend completely round the periphery of the base body (12).

21. A measuring tape according to any of claims 15 to 20, **characterized in that** the strip (2) carrying the measuring scale (3) is firmly connected to the base body at at least one place.

## Revendications

1. Ruban de mesure (1) flexible élastiquement pour dispositifs de mesure de longueurs ou d'angles, comportant une division de mesure (3), **caractérisé en ce qu'**il est formé de deux bandes (2, 4) flexibles élastiquement, qui adhèrent l'une à l'autre grâce à un film intermédiaire (5) visqueux et sur l'une (2) desquelles est appliquée la division de mesure (3).

2. Ruban de mesure selon la revendication 1, **caractérisé en ce que** la bande (4) qui ne porte pas la division de mesure (3), de son côté, est formée de deux bandes, qui adhèrent l'une à l'autre grâce un film intermédiaire visqueux ou un film intermédiaire élastique.

3. Ruban de mesure selon la revendication 1 ou 2, **caractérisé en ce que** le film intermédiaire (5) visqueux est formé d'huile silicone.

4. Ruban de mesure selon la revendication 3, **caractérisé en ce que** le film intermédiaire (5) visqueux a une épaisseur de 1 µm à 5 µm.

5. Ruban de mesure selon la revendication 1 ou 2, **caractérisé en ce que** le film intermédiaire (5) visqueux est formé de graisse silicone.

6. Ruban de mesure selon une des revendications 1 à 5, **caractérisé en ce que** la viscosité du film intermédiaire (5) est comprise dans une plage allant de 3.000 à 50.000 mm²/s.

7. Ruban de mesure selon une des revendications 1 à 6, **caractérisé en ce que** la bande (4) qui ne porte pas la division de mesure (3) est plus large que la bande (2) qui porte la division de mesure (3).

8. Ruban de mesure selon une des revendications 1 à 7, **caractérisé en ce que** les bandes (2, 4) sont formées de ruban d'acier à surface rectifiée ou polie.

9. Ruban de mesure selon la revendication 8, **caractérisé en ce que** les deux bandes (2, 4) sont en acier à ressort de 250 µm d'épaisseur.

10. Ruban de mesure selon la revendication 8 ou 9, **caractérisé en ce que**, sur la surface du ruban d'acier (2) qui porte la division de mesure (3), est appliquée une couche superficielle qui présente des propriétés de réflexion meilleures que la surface du ruban d'acier (2).

11. Ruban de mesure selon une des revendications 1 à 7, **caractérisé en ce que** les deux bandes (2, 4) sont en des matériaux qui présentent des coefficients de dilatation thermique différents.

12. Ruban de mesure selon une des revendications 1 à 11, **caractérisé en ce que** les deux bandes (2, 4) sont liées l'une à l'autre de manière fixe en un point (8).

13. Ruban de mesure selon la revendication 12, **caractérisé en ce que** le point de liaison fixe est situé à l'une des deux extrémités du ruban de mesure (1).

14. Ruban de mesure selon la revendication 12, **caractérisé en ce que** le point de liaison fixe est situé sensiblement au milieu du ruban de mesure (1).

15. Ruban de mesure selon une des revendications 1 à 14, **caractérisé en ce que**, pour former un dispositif de mesure d'angles, le ruban de mesure est disposé sur la surface extérieure d'un corps de base (12) cylindrique, la bande (4) qui ne porte pas la division de mesure étant appliquée sur le corps de base (12).

16. Ruban de mesure selon la revendication 15, **caractérisé en ce que** la bande (4) qui ne porte pas la division de mesure est liée par serrage et/ou par complémentarité de formes au corps de base (12).

17. Ruban de mesure selon la revendication 15 ou 16, **caractérisé en ce que** la bande (4) qui ne porte pas la division de mesure comporte des éléments de guidage (10, 11) latéraux pour la bande (2) qui porte la division de mesure (3).

18. Ruban de mesure selon une des revendications 15 à 17, **caractérisé en ce que** la bande (2) qui porte la division de mesure (3), à l'état monté, est soumise à une contrainte de traction.

19. Ruban de mesure selon la revendication 18, **caractérisé en ce que** les extrémités de la bande (2) qui porte la division de mesure (3) sont liées l'une à l'autre par des tendeurs.

20. Ruban de mesure selon une des revendications 15 à 19, **caractérisé en ce que** la bande (2) qui porte la division de mesure (3), ne s'étend pas sur la totalité du pourtour du corps de base (12).

21. Ruban de mesure selon une des revendications 15 à 20, **caractérisé en ce que** la bande (2) qui porte la division de mesure (3), est liée de manière fixe au corps de base (12) en au moins un point.
